# EUROPEAN PATENT SPECIFICATION

(11) **EP 1 508 468 B1**
(45) Date of publication and mention of the grant of the patent: **24.11.2010**
(21) Application number: 04028003.4
(22) Date of filing: 09.10.2002
(51) Int. Cl.: F16D 48/06

(54) **Control apparatus and control method for a changeover gear**
Steuerungsvorrichtung und -verfahren eines Schaltgetriebes
Procédé et appareil pour commander les changements de vitesse d'une transmission

(30) Priority: 11.10.2001 JP 2001313968
(43) Date of publication of application: 23.02.2005
(62) Divisional of application: 02779781.0
(73) Proprietor: Toyota Jidosha Kabushiki Kaisha, Toyota-shi, Aichi-ken, 471-8571 (JP)
(72) Inventor: Ido, Daisuke, Toyota Jidosha K.K., Aichi-ken, 471-8571 (JP); Watanabe, Hideo, Toyota Jidosha K.K., Aichi-ken, 471-8571 (JP)
(74) Representative: TBK-Patent

(56) References cited:
- EP-A- 0 390 423
- WO-A-00/23732
- DE-A1- 19 725 816

## Description

### BACKGROUND OF THE INVENTION

### 1. Field of the Invention

The invention relates to a control apparatus and control method for a change-over gear which controls disengagement and engagement of an automatic clutch and an output of a driving source of the change-over gear during a shift operation of the change-over gear.

### 2. Description of the Related Art

An example of a vehicle having a driving source for running a vehicle (i.e., driving source), an automatic clutch, and a transmission is disclosed in Japanese Patent Application Laid-Open No. 61-115731. In this vehicle, the driving source is such that torque is electronically controlled according to an amount of torque requested by a driver. The automatic clutch is provided in a power transmission path between the driving source and wheels, and selectively transmits and interrupts the transmission of power. The transmission is also provided in the power transmission path, and is such that it can achieve a plurality of gear speeds having different gear ratios. In a vehicle having an automatic clutch like that described above, during an upshift of the transmission, the automatic clutch is normally disengaged and a limit is placed on the output of the driving source. After the upshift is complete, on the other hand, the automatic clutch is normally engaged and the limit on the output of the driving source is cancelled. That is, the shift is performed in basically the same manner as a shift while the driver manually disengages the clutch, and driving torque is generally obtained in about the same or less time than with a shift operation by the driver.

Although the time required until the driving torque is restored is certainly short, because the output of the driving source is automatically increased and the automatic clutch is automatically engaged, there is nothing for the driver to do but wait until driving torque is obtained again. The period during which the driver must wait until torque from the driving source is generated and driving torque is obtained feels long, and it feels as if the vehicle is free running. In particular, when an internal combustion engine such as a gasoline engine that generates power by burning a fuel and in which torque is controlled by an opening angle of an electronically controlled throttle valve is used as the driving source, response from the time when the throttle valve is opened until torque is generated is poor, making the foregoing problems even more significant.

Furthermore a control apparatus according to the preamble of claim 1 is known from DE 197 25 816 A1.

### SUMMARY OF THE INVENTION

In view of the foregoing problems, it is an object of the invention to reduce the time required until driving torque is restored after a shift operation and thus reduce the feeling of free running.

This object is solved by the features according to claims 1 and 8.

### BRIEF DESCRIPTION OF THE DRAWINGS

Fig. 1 is a skeleton view schematically showing a driving apparatus for a vehicle with an automatic clutch, which is provided with a vehicle control apparatus for controlling a vehicle during shifting, which is one exemplary embodiment of the invention;
Fig. 2 is a view illustrating one example of the automatic clutch of the driving apparatus in Fig. 1;
Fig. 3 is a view illustrating a synchromesh clutch of the transmission in Fig. 1 in a disengaged state;
Fig. 4 is a view illustrating the synchromesh clutch of the transmission in Fig. 1 in an engaged state;
Fig. 5 is a block diagram illustrating a control system of the driving apparatus in Fig. 1;
Fig. 6 is a perspective view showing one example of a shift lever of the driving apparatus in Fig. 1;
Fig. 7 is a flowchart illustrating an engagement control of the automatic clutch after an upshift has been executed by an engine and transmission ECU shown in Fig. 5;
Fig. 8 is a flowchart illustrating a torque restoration control of an engine after an upshift has been executed by the engine and transmission ECU shown in Fig. 5; and
Fig. 9 is a time chart illustrating the operating state of each part when the engagement control of the automatic clutch and the torque restoration control of the engine are performed according to the flowcharts in Figs. 7 and 8.

### DETAILED DESCRIPTION OF PREFERRED EMBODIMENTS

Hereinafter, preferred embodiments of the invention will be described in detail.

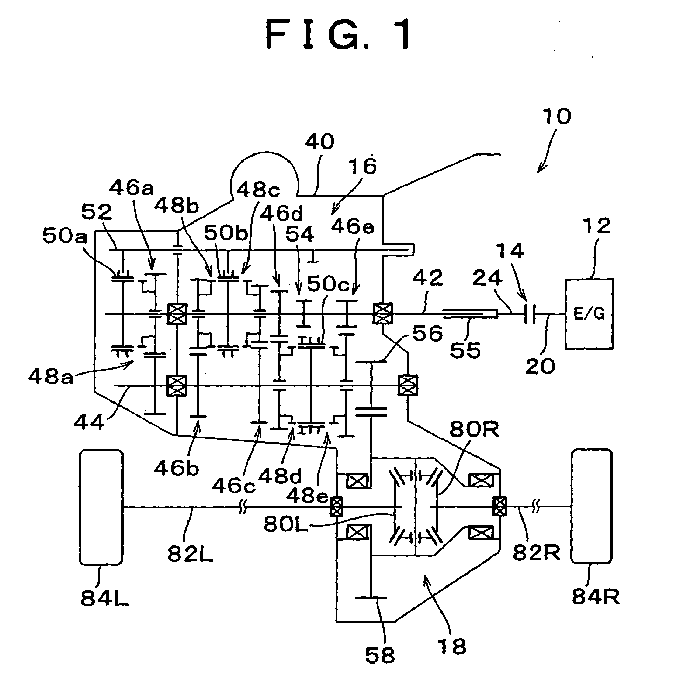

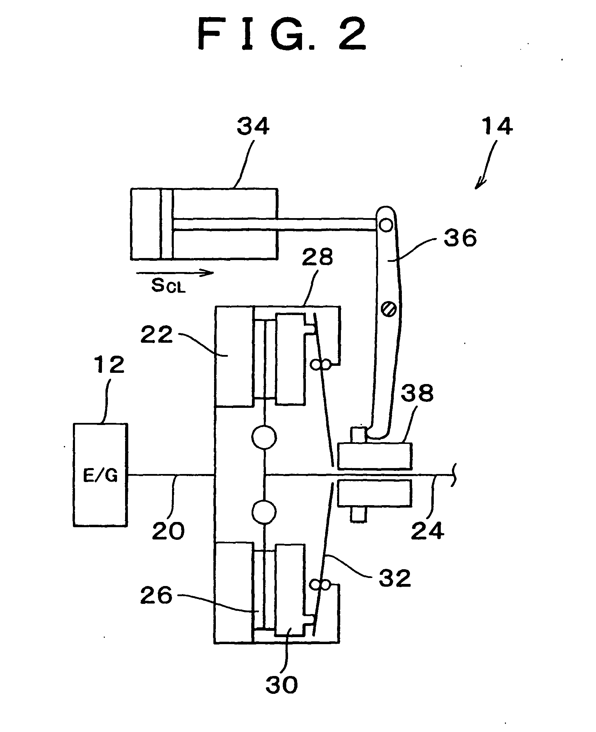

FIG. 1 is a skeleton view illustrating the schematic outline of a vehicle driving apparatus 10 of a vehicle with an automatic clutch to which the invention is applied. The vehicle driving apparatus 10 is designed to be used in a FF (front-engine front-drive) vehicle, and includes an engine 12 as an internal combustion engine for generating power by burning a fuel, an automatic clutch 14, a transmission 16, and a differential gear mechanism 18. The engine 12 is a driving source for running a vehicle (i.e., driving source). The automatic clutch 14 is a dry operating single disc type friction clutch which has a flywheel 22 mounted to a crankshaft 20 of the engine 12, a clutch disc 26 provided on a clutch output shaft 24, a pressure plate 30 arranged within a clutch cover 28, a diaphragm spring 32, and a release bearing 38. The diaphragm spring 32 serves to transmit power by pushing the pressure plate 30 against the clutch disc 26 which in turn presses against the flywheel 22. The release bearing 38 releases (disengages) the clutch when it is moved to the left in FIG. 2 via a release fork 36 by a clutch release cylinder 34, by displacing an inner end portion of the diaphragm spring 32 to the left in the figure.

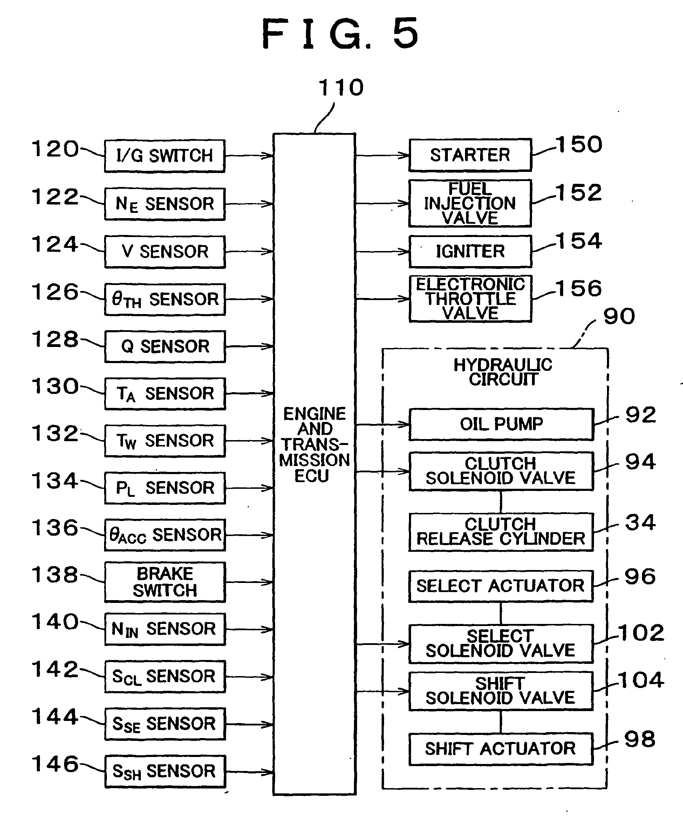

The clutch release cylinder 34 is connected to a clutch solenoid valve 94 of a hydraulic circuit 90 (see FIG. 5). The automatic clutch 14 is disengaged when operating oil drawn up by an electric oil pump 92 is supplied to the clutch release cylinder 34 from a clutch solenoid valve 94. When the operating oil is allowed to flow out of the clutch release cylinder 34, a spring force of the diaphragm spring 32 of the automatic clutch 14 forces the piston in the clutch release cylinder 34 back so that the automatic clutch 14 is engaged. The engaging torque of the automatic clutch 14 continually changes depending on the stroke amount S_{CL} of the piston in the clutch release cylinder 34. Therefore, the engaging torque is able to be electronically controlled by electronically opening and closing the clutch solenoid valve 94 to change the stroke amount S_{CL}.

Returning now back to FIG. 1, the transmission 16 forms a transaxle, and is arranged within a housing 40 along with the differential gear mechanism 18. The transmission 16 is immersed in lubricating oil, of which only a predetermined amount is filled in the housing 40, so as to be lubricated together with the differential gear mechanism 18. The transmission 16 is a synchromesh type transmission with five forward gear speeds that includes (a) a two shaft meshing type shift mechanism and (b) a shift and select shaft 52. The two shaft meshing type shift mechanism has a plurality of gear pairs 46a through 46e of different gear ratios arranged between an input shaft 42 and an output shaft 44, which are a pair of parallel shafts, and a plurality of synchromesh clutches 48a through 48e which correspond to those gear pairs 46a through 46e. The shift and select shaft 52 changes gear speeds by selectively moving any one of three clutch hub sleeves 50a, 50b, and 50c of the synchromesh clutches 48a through 48e. A reverse gear pair 54 is also provided on the input shaft 42 and the output shaft 44 such that a reverse gear speed is achieved by meshing these gears with a reverse idler gear provided on a countershaft, not shown. The input shaft 42 is connected to the clutch output shaft 24 of the automatic clutch 14 via a spline connection 55, while an output gear 56 provided on the output shaft 44 is meshed with a ring gear 58 of the differential gear mechanism 18. Further, FIG. 1 is an developed view showing the axis centers of the input shaft 42, the output shaft 44, and the ring gear 58 on the same plane.

The shift and select shaft 52 is provided so as to be able to both rotate around its axis center as well as move in the axial direction. The shift and select shaft 52 is able to be set in three positions around the axis center by a select actuator 96 (see FIG. 5), i.e., a first select position that enables engagement with the clutch hub sleeve 50c, a second select position that enables engagement with the clutch hub sleeve 50b, and a third select position that enables engagement with the clutch hub sleeve 50a. The shift and select shaft 52 is also able to be set in three positions in the axial direction by a shift actuator 98 (see FIG. 5), i.e., a neutral position (which is the state shown in FIG. 1) in the center, in which all of the synchromesh clutches 48a through 48e are disengaged and the reverse gear speed is not established, a first shift position (to the right side in FIG. 1) on one side of the neutral position in the axial direction, and a second shift position (to the left side in FIG. 1) on the other sides of the neutral position in the axial direction. The select actuator 96 and the shift actuator 98 serve as shift actuators and are connected to the hydraulic circuit 90 via a select solenoid valve 102 and a shift solenoid valve 104, respectively. Operation of the select actuator 96 and the shift actuator 98 is controlled by hydraulic pressure control and circuit switching.

In the first shift position of the first select position, a first gear speed is established which has the largest gear ratio e (= rotational speed N_{IN} of the input shaft 42/ rotational speed N_{OUT} of the output shaft 44) by interlocking the synchromesh clutch 48e. In the second shift position of the first select position, a second gear speed is established which has the second largest gear ratio e by interlocking the synchromesh clutch 48d. In the first shift position of the second select position, a third gear speed is established which has the third largest gear ratio e by interlocking the synchromesh clutch 48c. In the second shift position of the second select position, a fourth gear speed is established which has the fourth largest gear ratio e by interlocking the synchromesh clutch 48b. The gear ratio e of this fourth gear speed is 1. In the first shift position of the third select position, a fifth gear speed is established which has the smallest gear ratio e by interlocking the synchromesh clutch 48a. In the second shift position of the third select position, a reverse gear speed is established.

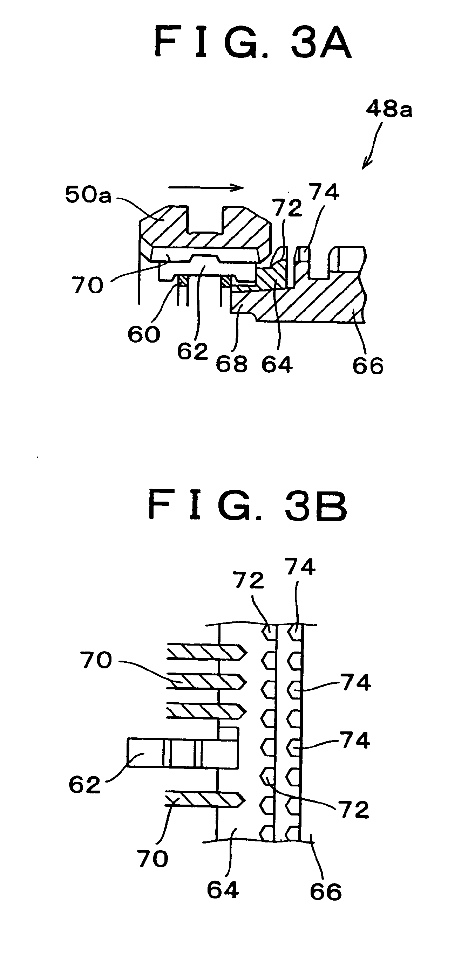

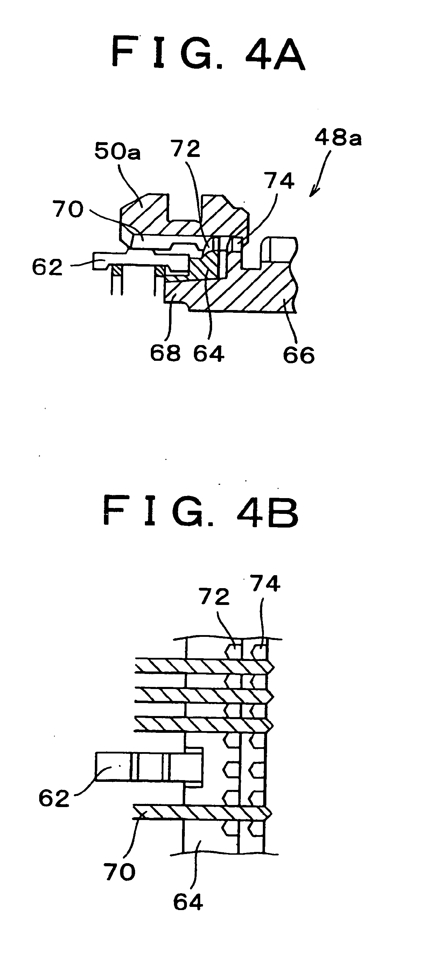

FIGS. 3A and 3B, and FIGS. 4A and 4B are detailed illustrations of the structure and operation of the synchromesh clutch 48a, which includes a shifting key 62 engaged with the clutch hub sleeve 50a by a key spring 60, a synchronizer ring 64 which rotates together with the shifting key 62 with a certain degree of play, and a cone portion 68 provided on an input gear 66 of the gear pair 46a. Spline teeth 70 are provided on an inner peripheral surface of the clutch hub sleeve 50a. These spline teeth 70 engage with the input shaft 42 so that the clutch hub sleeve 50a constantly rotates together with the input shaft 42. When the clutch hub sleeve 50a is moved to the right in the figure, the shifting key 62 presses the synchronizer ring 64 against the cone portion 68 so that the two engage. The friction between the synchronizer ring 64 and the cone portion 68 enables power to be transmitted to the input gear 66. When the clutch hub sleeve 50a is moved even further to the right in the figure, the spline teeth 70 mesh with spline teeth 72 provided on the synchronizer ring 64, as well as with spline teeth 74 provided on the input gear 66, as shown in FIG. 4. As a result, the input shaft 42 and the input gear 66 become interlocked such that driving power is transmitted via the gear pair 46a. FIG. 3 shows the synchromesh clutch 48a in a disengaged state and FIGS. 4A and 4B show the synchromesh clutch 48a in an engaged state. In particular, FIG. 4A is a cross-sectional view of a single plane including the axis center of the synchromesh clutch, and FIG. 4B is an developed view of the synchromesh clutch shown in FIG. 4A without the cylindrical portion of the clutch hub sleeve 50a when viewed from an outer peripheral side.

The other synchromesh clutches 48b through 48e are substantially similar in construction to the synchromesh clutch 48a, however, the synchromesh clutches 48b and 48c use the clutch hub sleeve 50b, while the synchromesh clutches 48d and 48e use the clutch hub sleeve 50c.

The differential gear mechanism 18 is a bevel gear type in which drive shafts 82R and 82L are coupled to a pair of side gears 80R and 80L, respectively, by spline engagement or the like so as to drive left and right front wheels (driven wheels) 84R and 84L.

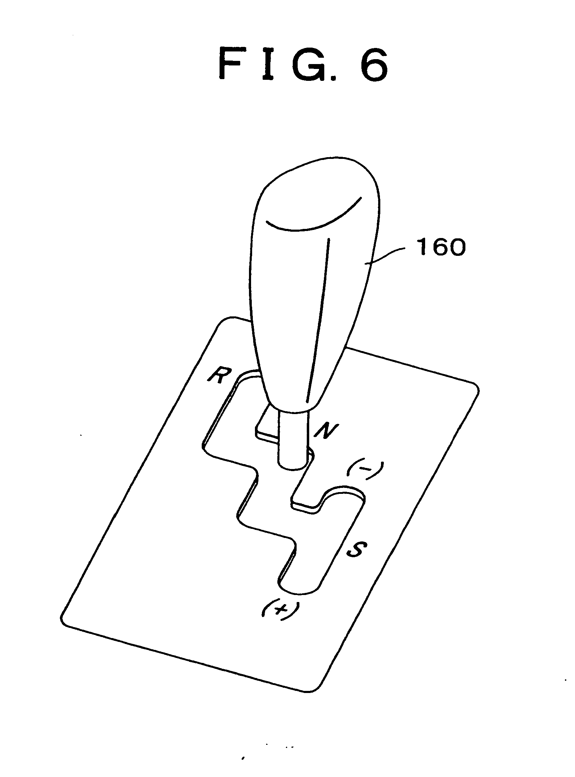

FIG. 5 is a block diagram illustrating a control system for the vehicle driving apparatus 10 according to this exemplary embodiment, which is provided with an engine and transmission ECU (Electronic Control Unit) 110. The engine and transmission ECU 110 includes a microcomputer and processes signals according to a program stored in advance in ROM while using a temporary memory function of RAM. A number of sensors and switches and the like are connected to the engine and transmission ECU 110, such as an ignition switch 120, an engine speed (N_{E}) sensor 122, a vehicle speed (V) sensor 124, a throttle valve opening angle (θ_{TH}) sensor 126, an intake air quantity (Q) sensor 128, an intake air temperature (T_{A}) sensor 130, an engine cooling water temperature (T_{w}) sensor 132, a lever position (P_{L}) sensor 134, an accelerator pedal operating amount (θ_{AAC}) sensor 136, a brake switch 138, an input shaft rotational speed (N_{IN}: rotational speed of an input shaft 42) sensor 140, a clutch stroke (S_{CL}) sensor 142, a select stroke (S_{SE}) sensor 144, and a shift stroke (S_{SH}) sensor 146. These sensors and switches send various signals to the engine and transmission ECU 110. For example, the ignition switch 120 sends a signal indicative of an operating position of the ignition switch 120; the engine speed sensor 122 sends a signal indicative of the engine speed N_{E}, the vehicle speed sensor 124 sends a signal indicative of the vehicle speed V (corresponding to a rotational output N_{OUT} of the output shaft 44; the throttle valve opening angle sensor 126 sends a signal indicative of the opening angle θ_{TH} of an electronic throttle valve 156; the intake air quantity sensor 128 sends a signal indicative of the intake air quantity Q; the intake air temperature sensor 130 sends a signal indicative of the intake air temperature (outside air temperature) T_{A}, the engine cooling water temperature sensor 132 sends a signal indicative of the engine cooling water temperature T_{W}; the lever position sensor 134 sends a signal indicative of the lever position P_{L}, which is an operating position of a shift lever 160 (see FIG. 6); the accelerator pedal operation amount sensor 136 sends a signal indicative of the accelerator pedal operation amount θ_{ACC}; the brake switch 138 sends a signal indicative of an operating state (i.e., ON or OFF) of a foot brake; the input shaft rotational speed sensor 140 sends a signal indicative of the input shaft rotational speed N_{IN}; the clutch stroke sensor 142 sends a signal indicative of the stroke of the automatic clutch 14, i.e., the stroke amount S_{CL} of the piston in the clutch release cylinder 34; the select stroke sensor 144 sends a signal indicative of the select stroke S_{SE} of the select actuator 96; and the shift stroke sensor 146 sends a signal indicative of the stroke amount S_{SH} of the shift actuator 98. The accelerator pedal operation amount θ_{ACC} corresponds to an amount of torque requested and an accelerator pedal corresponds to an operating member used for requesting torque, which is operated according to the amount of torque requested by a driver. Moreover, the stroke amount S_{SH} of the shift actuator 98 corresponds to a movement stroke of the clutch hub sleeves 50a through 50c of the synchromesh clutches 48a through 48e, so it can be determined whether the spline teeth 70 through 74 of the synchromesh clutches 48a through 48e are fully engaged, i.e., whether the shift of the transmission 16 has completely ended.

A starter (i.e., an electric motor) 150 is driven, the engine 12 is started, and the output state of the engine 12 is electronically controlled by controlling the fuel injection quantity and injection timing of the fuel injection valve 152, the ignition timing of the spark plug by an igniter 154, and the increase and decrease of the opening angle θ_{TH} of the electronic throttle valve 156 by a throttle actuator such as an electric motor according to the signals mentioned above. Also, disengagement and engagement, as well as engaging torque, of the automatic clutch 14 are electronically controlled by changing the operating state of the clutch release cylinder 34, while shifting of the transmission 16 is done electronically by changing the operating state of the select actuator 96 and the shift actuator 98. These are accomplished by controlling the operation of the electric oil pump 92 of the hydraulic circuit 90 and controlling the changing of the clutch solenoid valve 94, the select solenoid valve 102, and the shift solenoid valve 104.

The shift lever 160 is arranged next to a driver's seat, for example, and is retained in one of three positions to which it is selectively operated, the three positions being "R (reverse)", "N (neutral)", and "S (sequential)", as shown in FIG. 6. In the "S" position, the shift lever 160 can be selectively operated into a "(-)" position and a "(+)" position in the longitudinal direction of the vehicle. The lever position sensor 134 detects that operating position (i.e., the lever position) according to a plurality of ON and OFF switches and the like provided at each operating position, for example. When the shift lever 160 is operated to the "R" position, the transmission 16 changes into the reverse gear position, and when the shift lever 160 is operated to the "N" position, the transmission 16 switches to a state in which the transmission of power is interrupted (i.e., neutral). Also, in the "S" position, a sequential mode is established in which the transmission 16 is manually operated into any one of a plurality of forward gear positions by the driver. When the shift lever 160 is shifted into the "(+)" position, the plurality of forward gear positions of the transmission 16 upshifts and when the shift lever 160 is shifted into the "(-)" position, the plurality of forward gear positions of the transmission 16 downshifts. Because the "(+)" position is an upshift position, each time an upshift operation is performed, the gear speed shifts up one step to the high gear speed side in which the gear ratio e is small. On the other hand, because the "(-)" position is a downshift position, each time a downshift operation is performed, the gear speed shifts down one step to the low gear speed side in which the gear ratio e is large. The "(-)" position and "(+)" position in front and in back of the "S" position are both unstable so after the shift lever 160 is shifted into either of these positions, it automatically returns to the "S" position by an urging device such as a spring.

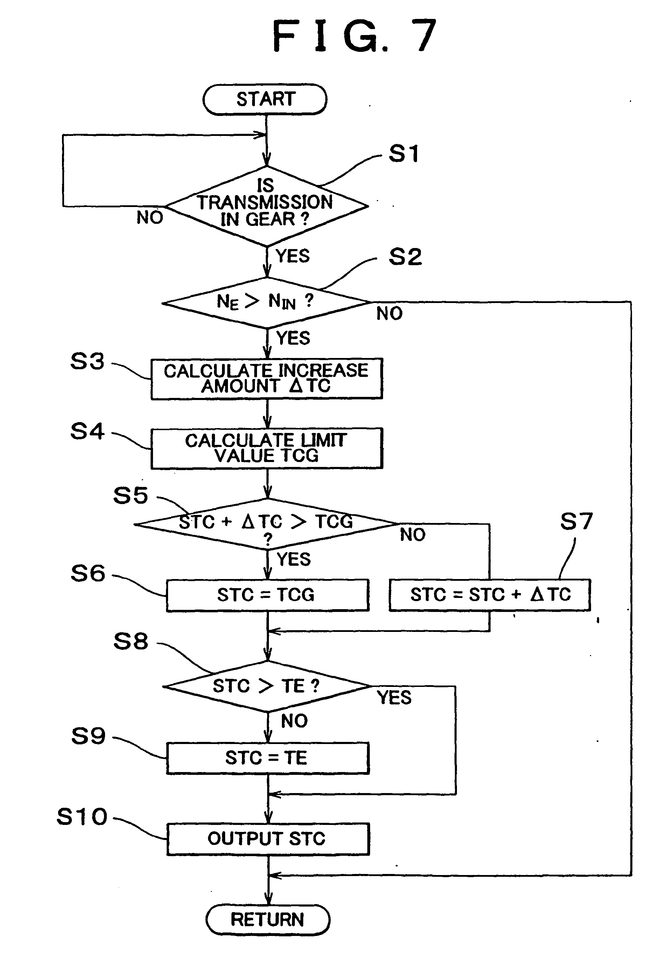

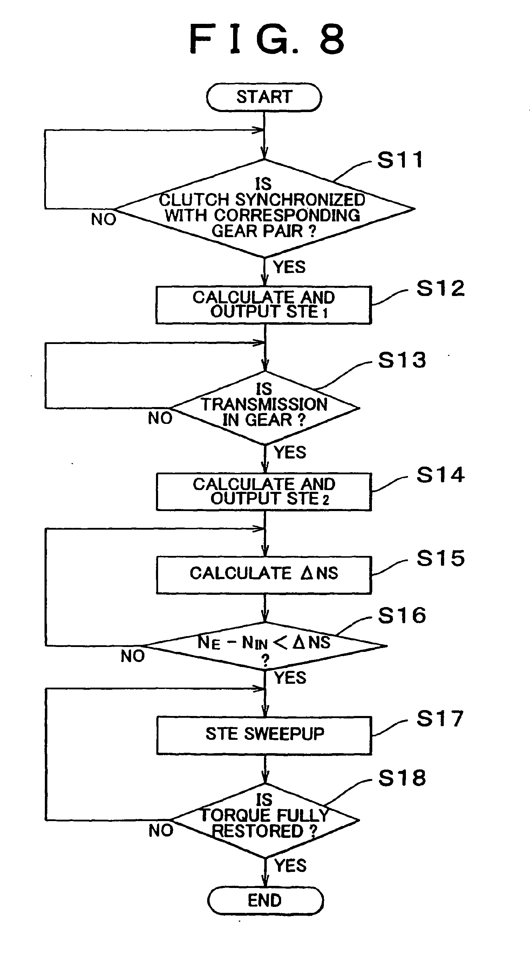

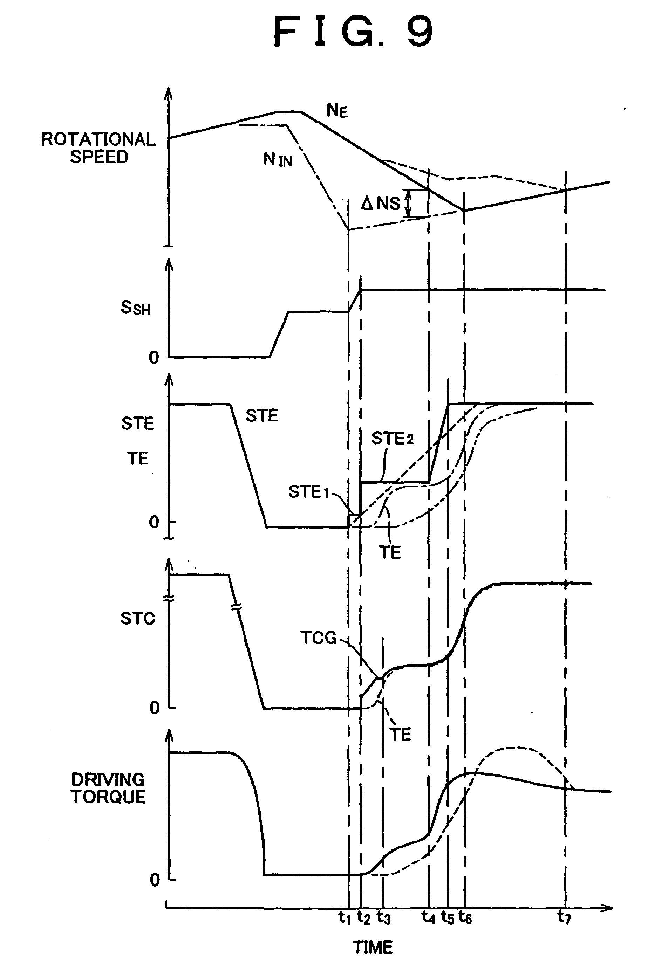

Meanwhile, when the transmission 16 upshifts according to a shift operation of the shift lever 160, the engine and transmission ECU 110 temporarily stops output of the engine by disengaging the automatic clutch 14 and closing the electronic throttle valve 156 and the like. The engine and transmission ECU 110 is also engages the automatic clutch 14 after the upshift is complete and restores output of the engine 12. FIG. 7 is a flowchart illustrating in detail the engagement control of the automatic clutch 14 after shifting. FIG. 8 is a flowchart illustrating in detail the torque restoration control of the engine 12 after shifting. FIG. 9 is one example of a time chart showing the change in operation of each part when the engagement control, shown in FIG. 7, and the torque restoration control, shown in FIG. 8, are performed.

In Step S1 in FIG. 7, it is determined whether any one of the synchromesh clutches 48a through 48e, which engage during an upshift of the transmission 16, is engaged, or more specifically, whether the spline teeth 70 and 74 are fully meshed such that shifting is complete (i.e., the transmission 16 is in gear), based on the shift stroke S_{SH} of the shift actuator 98. The shift stroke S_{SH} section in FIG. 9 is a graph in which the previous gear is made a reference (0) and engagement is shown at time t₂.

If the transmission 16 is in gear such that the determination in Step S1 is YES (positive), the routine proceeds to Step S2, in which it is determined whether the engine speed N_{E} is greater than the input shaft rotational speed N_{IN}. With an upshift, because the input shaft rotational speed N_{IN} drops, the determination is usually YES with N_{E} > N_{IN}. However, in a case in which it has taken time to get the transmission 16 in gear or the like, it is possible that N_{E} ≤ N_{IN}. In this case, there is no driving torque from the inertia of the engine 12 so the routine ends at that point and engagement control is performed to increase the engaging torque of the automatic clutch 14 in response to the restoration of torque from the engine 12, for example.

If N_{E} > N_{IN} such that the determination in Step S2 is YES, the routine proceeds to Step S3, in which an increase amount ΔTC of the engaging torque of the automatic clutch 14 is calculated. The increase amount ΔTC is obtained from a preset data map having the accelerator pedal operation amount θ_{ACC} and the rotational speed difference (N_{E}-N_{IN}) as parameters, and in which the increase amount ΔTC increases as the accelerator pedal operation amount θ_{ACC} and the rotational speed difference increase, for example. During an upshift, the engine torque is decreased so there is no need for an accelerator pedal operation. However, running performance is able to be further improved by finely controlling the engaging torque in accordance with the accelerator pedal operation amount θ_{ACC}, e.g., generating large engaging torque, with priority given to rapidly restoring driving torque rather than to reducing engaging shock when the accelerator pedal operation amount θ_{ACC} is large, for example, depending on whether or not there is an accelerator pedal operation and on the accelerator pedal operation amount θ_{ACC}. It is preferable that the driver drive while being aware of engaging torque control of the automatic clutch 14 when there is an upshift in this way, but even if the driver is unaware, because there is a great demand for acceleration when there is an upshift while there is an accelerator pedal operation, it is highly unlikely that the driver will feel any discomfort even if there is some shock.

In Step S4, a limit value TCG of the engaging torque is calculated to minimize shock from the engagement of the automatic clutch 14 and reduce the possibility of the engine speed N_{E} suddenly dropping. This limit value TCG is also obtained from a preset data map having the accelerator pedal operation amount θ_{ACC} and the rotational speed difference (N_{E}-N_{IN}) as parameters, and in which the limit value TCG increases as the accelerator pedal operation amount θ_{ACC} and the rotational speed difference increase, for example, just as with the ΔTC. In Step S5, a value (engaging torque command value STC + ΔTC), which is the sum of a current engaging torque command value STC and the increase amount ΔTC obtained in Step S3, is compared with the limit value TCG. When the limit value TCG is smaller than that value, the limit value TCG is set as a new engaging torque command value STC in Step S6. On the other hand, when the new value (engaging torque command value STC + ΔTC) is equal to, or less than, the limit value TCG, that value (engaging torque command value STC + ΔTC) is set as the new engaging torque command value STC in Step S7. Accordingly, the engaging torque command value STC increases by increments of the increase amount ΔTC until the limit value TCG is reached. The engaging torque command value STC increases with a steep slope the larger the accelerator pedal operation amount θ_{ACC} and the rotational speed difference (N_{E}-N_{IN}) until it becomes a large value. The engaging torque command value STC may also be made to increase by increments of the increase amount ΔTC from an initial value 0. According to this exemplary embodiment, however, the engaging torque command value STC is increased in a discontinuous manner from a preset constant initial value. From that initial value, the engaging torque command value STC is then increased by increments of the increase amount ΔTC. Also, the engaging torque of the automatic clutch 14 is controlled according to the clutch stroke S_{CL}, which is the piston stroke of the clutch release cylinder 34, so that the response is comparatively good and the actual engaging torque also changes substantially along with the engaging torque command value STC shown in the time chart in FIG. 9.

In Step S8, it is determined whether the new engaging torque command value STC set in Step S6 or Step S7 is greater than the actual engine torque TE. When STC > TE, the routine proceeds directly to Step S10, in which the automatic clutch 14 is engaged at the engaging torque command value STC. That is, the clutch stroke S_{CL} corresponding to the engaging torque command value STC is obtained using a preset data map or an operational expression. The clutch solenoid valve 94 is then controlled so that that clutch stroke S_{CL} will be achieved. Further, when the engine torque TE is equal to, or greater than, the engaging torque command value STC, the routine proceeds to Step S9, in which engine torque TE is made the engaging torque command value STC, and then on to Step S 10. The engine torque TE can be calculated (estimated) from the engine speed N_{E} and the opening angle θ_{TH} or the engine speed N_{E} and the intake air quantity Q or the like, or may be detected using a torque sensor or the like.

Accordingly, after the transmission 16 is in gear (has completed shifting) until the engine torque TE starts to increase, the engaging torque is increased by increments of the increase amount ΔTC from the preset initial value. When the limit value TCG is achieved, the engaging torque is limited to that limit value TCG. When the engine torque TE starts to increase by the torque restoration control, the engaging torque also increases in response to that engine torque TE. The dotted line in the engaging torque command value STC section in FIG. 9 shows the engine torque TE. Time t₃ is the time at which the engine torque TE exceeds the limit value TCG, and time t₆ is the time at which the engaging torque increases such that the engine speed N_{E} and the input shaft rotational speed N_{IN} match and the automatic clutch 14 is fully engaged. When the engaging torque command value STC is controlled in response to the engine torque TE, it is preferable that the engaging torque command value STC be corrected according to an operational expression of feedback control such that the engine speed N_{E} changes in a predetermined pattern (e.g., at steady rate of decrease), for example. Further, when the engine torque TE starts to be generated early, the engine torque TE may exceed the engaging torque command value STC before the engaging torque command value STC reaches the limit value TCG.

Here, in the region in which the engaging torque command value STC is larger than the engine torque TE, i.e., between time t₂ and time t₃ in FIG. 9, the automatic clutch 14 engaging at a predetermined engaging torque causes the engine speed N_{E} to drop. This change in rotational speed results in inertia in the engine 12, which generates driving torque.

Meanwhile, in Step S11 in FIG. 8, which relates to the torque restoration control of the engine torque, it is determined whether any one of the synchromesh clutches 48a through 48e, which are engaged during an upshift of the transmission 16, is synchronized with the corresponding one of the gear pairs 46a through 46e by determining whether the synchronized rotational speed (N_{OUT} × e), which is the product of N_{OUT} and the gear ratio e after shifting, approximately matches with the input shaft rotational speed N_{IN}, for example. If the determination in Step S11 is YES, the routine proceeds on to Step S12, in which a first engine torque command value STE1 is calculated and output to control the electronic throttle valve 156 and the fuel injection valve 152 and the like. The first engine torque command value STE1 is obtained from a preset data map or the like having the accelerator pedal operation amount θ_{ACC} and a gear speed after shifting or the like as parameters, for example. Because the engine torque TE is restored more rapidly the larger the accelerator pedal operation amount θ_{ACC}, the first engine torque command value STE1 is set to a large value. The torque command value STE then increases in a discontinuous (i.e., stepped) manner. However, because the synchromesh clutches 48a through 48e are not fully engaged at the synchronizing stage, the first engine torque command value STE1 is set so that the engine torque TE starts to increase after engagement of the synchromesh clutches 48a through 48e (after shifting is complete), considering a response delay in the start of torque generation of the engine 12. In other words, the first engine torque command value STE1 is set so that the engine torque TE is restored quickly after shifting is complete by starting the torque restoration control of the engine 12 before shifting is complete, considering the response delay of the engine 12. Time t₁ is FIG. 9 is the time at which synchronization was determined. The chain line in the torque command value STE section in FIG. 9 graphs of the actual engine torque TE. The first engine torque command value STE1 corresponds to a first torque command value.

In Step S 13, it is determined whether the transmission 16 is in gear, just as in Step S1 in FIG. 7. When the determination in Step S 13 is YES, the routine proceeds on to Step S 14, in which a second engine torque command value STE2 is calculated and output to control the output gear 156 and the shift and select shaft 52 and the like. Just like the first engine torque command value STE1, the second engine torque command value STE2 is obtained from a preset data map or the like having the accelerator pedal operation amount θ_{ACC} and a gear speed after shifting or the like as parameters, for example. Because the engine torque TE is restored more rapidly the larger the accelerator pedal operation amount θ_{ACC}, the second engine torque command value STE2 is set to a large value. The torque command value STE then increases in a discontinuous (stepped) manner. However, the second engine torque command value STE2 is set so that the speed of the engine 12 does not abruptly increase before the automatic clutch 14 is engaged. Time t₂ in FIG. 9 is the time at which it was determined that the transmission 16 is in gear. The second engine torque command value STE2 corresponds to a second torque command value.

When it can not be determined (in the case where the determination is made by a timer or the like) whether the transmission 16 is in gear after synchronization has been determined, due to lockup or the like, the automatic clutch 14 is disengaged and torque control of the engine 12 shifts to rotational speed control or the like, and either retry logic is performed or the transmission 16 waits for another shift request from the driver.

In Step S15, a threshold value ΔNS is calculated which starts to sweep up the engine torque. Then in Step S16, it is determined whether the rotational speed difference (N_{E}-N_{IN}) between the engine speed N_{E} and the input shaft rotational speed N_{IN} is less than the threshold value ΔNS. The threshold value ΔNS is used to sweep up the engine torque in anticipation of full synchronization of the engine speed N_{E}. The threshold ΔNS may be obtained from a preset data map or the like having the accelerator pedal operation amount θ_{ACC} and a gear speed after shifting or the like as parameters, for example, and is set to a large value the larger the accelerator pedal operation amount θ_{ACC}. If the rotational speed difference (N_{E}-N_{IN}) is less than the threshold value ΔN_{E} such that the determination in Step S16 is YES, the routine proceeds on to Step S 17, in which the torque command value STE is increased by increments of a predetermined increase amount ΔTE. Then in Step S 18, it is determined whether the torque command value STE has reached a value corresponding to the accelerator pedal operation amount θ_{ACC}. Step S 17 is repeated until the torque command value STE reaches a value corresponding to the accelerator pedal operation amount θ_{ACC} and the engine torque sweeps up (i.e., gradually increases). The increase amount ΔTE is obtained, for example, from a preset data map or the like having the accelerator pedal operation amount θ_{ACC} and a gear speed after shifting or the like as parameters, for example. Because the engine torque TE is restored faster the larger the accelerator pedal operation amount θ_{ACC}, the increase amount ΔTE is set to a large value. Time t₄ is the time at which the rotational speed difference (N_{E}-N_{IN}) is less than the threshold value ΔNS. Time t₅ is the time at which the torque command value STE has reached the value corresponding to the accelerator pedal operation amount θ_{ACC}.

Here, in Steps S11 through S14 in FIG. 8, the torque command value STE is increased in a discontinuous manner by increments of a predetermined amount and the engine torque TE starts to be generated quickly.

The dotted line in the torque command value STE section in FIG. 9 denotes the conventional torque command value STE that increases gradually at a predetermined rate of change, and the two-dot chain line denotes the actual engine torque TE in this case. Also, the dotted lines in the rotational speed and driving torque sections in the same figure denote the engine speed N_{E} and the driving torque, respectively, when the engaging torque of the automatic clutch 14 first starts to increase in response to the conventional engine torque TE. Time t₇ is the time at which the engine speed N_{E} matches the input shaft rotational speed N_{IN} and the automatic clutch 14 is fully engaged in the conventional example.

In this way, according to this exemplary embodiment, during engagement control of the automatic clutch 14 after an upshift of the transmission 16, the engaging torque of the automatic clutch 14 starts to be generated before the engine torque TE starts to increase. As a result, the engine speed N_{E} is forcibly reduced according to that engaging torque. Driving torque is then generated by the angular velocity at that time, before the engine torque TE is restored, thus minimizing a feeling of free running. That is, as shown by the driving torque section in FIG. 9, driving torque starts to be generated faster in this exemplary embodiment, shown by the solid line, than in the conventional example, shown by the dotted line.

Further, with the torque restoration control of the engine torque TE after an upshift, the torque command value STE is increased in a discontinuous manner. As a result, the torque command value STE starts to be generated faster than when it is increased at a predetermined rate of increase. Driving torque is able to be obtained from inertia before time t₃, then after time t₃, to be increased smoothly by adding the engine torque TE to the torque obtained from the inertia, and the engine torque TE corresponding to the accelerator pedal operation amount θ_{ACC} is able to be quickly obtained. In this case, because the automatic clutch 14 is controlled to engage before the engine torque TE has been restored, an abnormal increase (i.e., an abrupt increase) in the engine speed N_{E} able to be well prevented regardless of the rapid increase in the engine torque TE.

Moreover, according to the exemplary embodiment, before the synchromesh clutches 48a through 48e are at the stage where they are synchronized with their corresponding gear pairs 46a through 46e, i.e., before shifting is complete, the electronic throttle valve 156 and the like are controlled according to the first engine torque command value STE1, and after engagement of the synchromesh clutches 48a through 48e has been determined, i.e., after shifting is complete, the electronic throttle valve 156 and the like are controlled according to the second engine torque command value STE2. Therefore, the engine torque TE is able to be increased even faster after shifting of the transmission 16 is complete regardless of the response delay from when the electronic throttle valve 156 is opened until torque starts to be generated.

Moreover, when the engine torque TE is restored quickly, the time until the automatic clutch 14, which is engaged in response to the engine torque TE, fully engages is shorter, such that the total time required for shifting, including engagement control of the automatic clutch 14, is shorter. That is, in FIG. 9, according to this exemplary embodiment, the automatic clutch 14 is fully engaged at time t₆. In the conventional example, on the other hand, the automatic clutch 14 is not fully engaged until time t₇.

Also, by starting to generate engaging torque of the automatic clutch 14 before the engine torque TE starts to increase, driving torque is able to be generated from the inertia of the engine 12. As a result, the engine torque TE does not always need to be restored quickly, thereby allowing extra time until the torque of the engine 12 is restored, which increases the degree of freedom with respect to the design of the intake system.

Although the invention has been described herein with reference to specific embodiments, many modifications and variations therein will readily occur to those skilled in the art. Accordingly, all such variations and modifications are included within the intended scope of the invention.

In the foregoing exemplary embodiment, an internal combustion engine is suitably used as the driving source. However, an electric motor that is able to run on electric energy, and in which the torque can be controlled according to a torque command value such as a current value, can also be used. The invention can also be applied to a vehicle provided with both an internal combustion engine and an electric motor as the driving source.

The driving source is able to electronically control the torque in accordance with an amount of torque requested by the driver. That amount of torque requested may be detected based on, for example, an operating amount of, or operating force applied to, a member to be operated for a torque request such as an accelerator pedal that is operated by the driver.

The transmission preferably used is one that automatically changes gear speeds by a shift actuator, such as one that automatically shifts according to a preset automatic shift condition or changes the gear speed according to a selected operation (including upshift and downshift operations) by the driver. However, a transmission may also be used in which the gear speeds are mechanically shifted by a driver with a shift lever operation or the like. The invention preferably applies to a case in which the driver is requesting torque. In the case of an automatic transmission which automatically changes gear speeds according to a shift condition, the invention preferably applies to power-on upshift in which the driver is requiring torque by depressing the accelerator pedal or the like.

Also, when the gear speed is changed by a selected operation by the driver, there are cases in which the driver consciously cancels the torque request. However, when an upshift is performed by a manual operation, torque is generally desired, so it is preferable to apply the invention regardless of whether there is a torque request. In this case, when there is a torque request from the driver, it is also possible to change the engaging control of the automatic clutch and the torque restoration control of the driving source based on whether or not there is a torque request by the driver. For example, it is possible to engage the automatic clutch with a large engaging torque, set the torque command value of the driving source to a large value, and give priority to rapidly restoring the driving torque rather than reducing the shock from engagement.

A synchromesh type transmission is preferably used as the transmission. However, a planetary gear type transmission in which the transmission of power does not always have to be interrupted and the output from the driving source does not always have to be limited can also be used. These transmissions are stepped transmissions which establish a plurality of gear speeds having different gear ratios, but a belt type continuously variable transmission which continuously changes the gear ratios can also be used.

A friction device type clutch or a magnetic particle type electromagnetic clutch or the like that is able to control the engaging torque is preferably used as the automatic clutch. The friction engaging type clutch is constructed so as to engage using friction according to an urging force of a spring such as a diaphragm spring and disengage (release) by sliding the release sleeve with the clutch release cylinder, for example. The engaging torque may be controlled by the stroke amount of the clutch release cylinder, for example. The stoke amount of the clutch release cylinder may be controlled by switching a hydraulic circuit using an electromagnetic switching valve or the like, for example. Another exemplary embodiment of the automatic clutch as a whole includes a case in which the transmission and interruption of that transmission of power are performed using a hydraulic type of brake in which a reaction force element of a planetary gear set is fixed to a housing or the like.

The foregoing clutch is arranged so as to selectively transmit and interrupt the transmission of power between the driving source and the transmission, for example. The clutch may also be arranged so as to selectively transmit and interrupt the transmission of power between the transmission and the wheels.

Limiting of the output of the driving source during shifting may be done, for example, by making the torque approximately 0 just as if there were a fuel cut to the internal combustion engine. Alternatively, output of the driving source during shifting may be limited by generating a comparatively small predetermined amount of torque either according to, or irrespective of, an amount of torque requested by the driver. According to this exemplary embodiment, when the automatic clutch is engaged after the upshift is complete, "before the torque of the driving source is restored", which is the time at which the automatic clutch is engaged with a larger engaging torque than the torque of the driving source, is before the torque from the torque restoration control actually starts to increase. By engaging the automatic clutch with an engaging torque that is larger than that torque, driving torque can be obtained based mainly on the inertia of the driving source before the torque of the driving source is restored.

Cancellation of the limit on the output of the driving source and engagement of the automatic clutch after shifting is complete are not limited as long as they are such that the output of the driving source increases and clutch engaging torque is generated after shifting is actually complete. The commands themselves for that cancellation and engagement can be output before shifting is complete.

It is preferable that the engaging torque of the automatic clutch increase in a discontinuous manner until the predetermined initial value and that the following increase is smooth by a predetermined increase amount (rate of change). It is also preferable that that increase amount be obtained from a preset data map or the like in which the torque amount requested by the driver and the rotational speed difference between the rotational speed of the driving source and a rotational speed that matches a rotational speed after shifting are set as parameters, for example. It is also preferable that a limit value be placed on the engaging torque to reduce shock generated by sudden engagement.

After the torque of the driving source exceeds the engaging torque, the engaging torque can be made to increase in response to that torque of the driving source. In this case, it is preferable to further perform feedback control with the engaging torque based on the actual change in rotational speed of the driving source or the like.

It is preferable that the torque command value of the driving source be obtained by a preset data map in which the torque amount requested by the driver and a gear speed (i.e., gear ratio) or the like are set as parameters, for example. When the rotational speed of the driving source nears a rotational speed that matches the rotational speed after shifting, it is preferable to smoothly increase the torque command value by a predetermined increase amount (rate of change) until it corresponds to the torque amount requested by the driver. It is also preferable to obtain the increase amount at that time from a preset data map in which the torque amount requested by the driver and a gear speed (i.e., gear ratio) are set as parameters, for example, just like with the torque command value above.

## Claims

1. Control apparatus for a change-over gear (16), wherein
the change-over gear includes a plurality of gear stages, is driven by a driving source (12) and is provided with an output shaft (44) and an input shaft (42); said control apparatus comprising:
a means for reducing an input torque provided by said driving source (12) and for disengaging an automatic clutch (14) provided between said change-over gear (16) and said driving source (12) while a shift operation between each gear stage is performed, wherein
a rotational speed (NE) of an output shaft (20) of said driving source (12) differs from a rotational speed (NIN) of the input shaft (42) of said change-over gear (16) during a shift operation; and
a means for increasing the torque (TE) of said driving source (12) after the shift operation is completed;
**characterized by**
a means for increasing a torque command value (STE) for the driving source (12) in steps of a predetermined amount when restoring the torque of the driving source (12) after the shift operation is completed, wherein
the predetermined amount is set based on at least one of the amount of torque requested and a difference between the rotational speed (NE) of the driving source (12) and the rotational speed (NIN) of said input shaft (42) of said change-over gear (16), and
the torque command value (STE) is discontinuously increased when a synchronized rotational speed (NOUT x e), which is the product of the rotational speed NOUT of the output shaft (44) of said change-over gear (16) and the gear ratio (e), approximately matches with the rotational speed (NIN) of said input shaft (42) of said change-over gear (16), and when the change-over gear (16) is in gear, and then,
the torque command value (STE) is gradually increased when the rotational speed difference (NE-NIN) between the rotational speed (NE) of the driving source (12) and the rotational speed (NIN) of said input shaft (42) of said change-over gear (16) is less than a threshold value (ΔNS) which is used to sweep up the torque of the driving source (12) in anticipation of full synchronization of the rotational speed (NE) of the driving source (12).

2. The control apparatus according to claim 1,
**characterized by** comprising
a means for engaging the automatic clutch (14), when an engaging torque (STC) that is greater than the torque (TE) of the driving source (12) is less than a limit value (TCG), with that engaging torque (STC), and
a means for engaging the automatic clutch (14), when that engaging torque (STC) is equal to, or greater than, the limit value (TCG), with an engaging torque (STC) corresponding to the torque (TE) of the driving source (12) .

3. The control apparatus according to claim 2,
**characterized by**
a means for increasing the engaging torque (STC) in response to the torque (TE) of the driving source (12) when the torque (TE) of the driving source (12) starts to increase based on the torque command value (STE).

4. The control apparatus according to any one of claims 1 through 3, wherein
the driving source (12) is an internal combustion engine which generates power by burning a fuel to drive a vehicle; and
synchromesh clutches (48a-48e) are provided as a synchronization means of said gear pairs (46a-46e);
**characterized in that** the control apparatus comprises
a means for controlling the torque (TE) of the internal combustion engine (12) according to a first preset torque command value (STE1) at a stage when the synchronization of a of at least one of the synchromesh clutches with the respective gear pair is detected by the fact that a ratio between the input shaft speed and the output shaft speed of the change-over gear corresponds to a gear ratio of one of said gear pairs, and
a means for controlling the torque (TE) of the internal combustion engine (12) according to a second torque command value (STE2) that is greater than the first torque command value (STE1) at a stage when it is detected that splines of the at least one of the synchromesh clutches are meshed with the corresponding gear pair thereof by the fact that a shaft (52) of said change-over gear (16) reaches a predetermined stroke (SSH).

5. The control apparatus according to any one of claims 1 to 4,
**characterized by**
a means for electronically controlling the torque of the driving source according to an amount of requested torque.

6. The control apparatus according to any one of claims 1 to 5, **characterized by:**
a means for electronically controlling the engaging torque of said automatic clutch.

7. The control apparatus according to any one of claims 1 to 6, **characterized in that:**
the shift operation is an upshift operation to a higher gear stage.

8. A control method for a change-over gear (16), wherein the change-over gear comprises a plurality of gear stages, is driven by a driving source (12) and is provided with an output shaft (44) and an input shaft (42), wherein an automatic clutch (14) is provided in a transmission path between said driving source (12) and said change-over gear (14) for selectively interrupting and enabling the transmission of a torque between said driving source (12) and said change-over gear (14), wherein the control method comprises the steps of:
reducing a torque of said driving source (12) and disengaging said automatic clutch (14) during a shift operation of said change-over gear (16);
controlling a rotational speed (TE) of said driving source (12) during a shift operation of said change-over gear (16) such that it differs from a rotational speed (NIN) of an input shaft (42) of said change-over gear (16); and
increasing the torque (TE) of said driving source (12) after completion of the shift operation;
**characterized by** the steps of:
increasing a torque command value (STE) for the driving source (12) in steps of a predetermined amount when restoring the torque of the driving source after the shift operation is completed, wherein the predetermined amount is set based on at least one of the amount of torque requested and a difference between the rotational speed (NE) of the driving source (12) and the rotational speed (NIN) of said input shaft (42) of said change-over gear (16), wherein
the torque command value (STE) is discontinuously increased when a synchronized rotational speed (NOUT x e), which is the product of the rotational speed NOUT of the output shaft (44) of said change-over gear (16) and the gear ratio (e), approximately matches with the rotational speed (NIN) of said input shaft (42) of said change-over gear (16), and when the change-over gear (16) is in gear, and then,
the torque command value (STE) is gradually increased when the rotational speed difference (NE-NIN) between the rotational speed (NE) of the driving source (12) and the rotational speed (NIN) of said input shaft (42) of said change-over gear (16) is less than a threshold value (ΔNS) which is used to sweep up the torque of the driving source (12) in anticipation of full synchronization of the rotational speed (NE) of the driving source (12).

## Patentansprüche

1. Steuervorrichtung für ein Schaltgetriebe (16), wobei
das Schaltgetriebe eine Vielzahl von Getriebestufen hat, von einer Antriebsquelle (12) angetrieben wird und mit einer Ausgangswelle (44) und einer Eingangswelle (42) versehen ist; wobei die Steuervorrichtung Folgendes aufweist:
eine Einrichtung zum Reduzieren eines von der Antriebsquelle (12) bereitgestellten Eingangsdrehmoments und zum außer Eingriff Bringen einer zwischen dem Schaltgetriebe (16) und der Antriebsquelle (12) vorgesehenen automatischen Kupplung (14), während ein Schaltvorgang zwischen jeder Getriebestufe ausgeführt wird, wobei
eine Drehzahl (NE) einer Ausgangswelle (20) der Antriebsquelle (12) sich von einer Drehzahl (NIN) der Eingangswelle (42) des Schaltgetriebes (16) während eines Schaltvorgangs unterscheidet; und
eine Einrichtung zum Erhöhen des Drehmoments (TE) der Antriebsquelle, nachdem der Schaltvorgang abgeschlossen ist;
**gekennzeichnet durch**
eine Einrichtung zum Erhöhen eines Drehmomentbefehlswerts (STE) für die Antriebsquelle (12) in Schritten um einen vorgegebenen Betrag, wenn das Drehmoment der Antriebsquelle wiederhergestellt ist, nachdem der Schaltvorgang abgeschlossen ist, wobei
der vorgegebene Betrag basierend auf mindestens einem von dem angeforderten Drehmomentbetrag und einer Differenz zwischen der Drehzahl (NE) der Antriebsquelle (12) und der Drehzahl (NIN) der Eingangswelle (42) des Schaltgetriebes (16) festgesetzt ist, und
der Drehmomentbefehlswert (STE) auf eine diskontinuierliche Weise erhöht wird, wenn eine synchronisierte Drehzahl (NOUT x e), die das Produkt aus der Drehzahl NOUT der Ausgangswelle (44) des Schaltgetriebes (16) und dem Übersetzungsverhältnis (e) ist, annähernd mit der Drehzahl (NIN) der Eingangswelle (42) des Schaltgetriebes (16) in Übereinstimmung kommt, und wenn das Schaltgetriebe (16) eingekuppelt ist, und dann,
der Drehmomentbefehlswert (STE) allmählich erhöht wird, wenn die Drehzahldifferenz (NE-NIN) zwischen der Drehzahl (NE) der Antriebsquelle (12) und der Drehzahl (NIN) der Eingangswelle (42) des Schaltgetriebes (16) weniger als ein Schwellwert (ΔNS) ist, der verwendet wird, um das Drehmoment der Antriebsquelle (12) unter Vorwegnahme auf eine vollständige Synchronisation der Drehzahl (NE) der Antriebsquelle (12) mitzureißen.

2. Steuervorrichtung nach Anspruch 1,
**dadurch gekennzeichnet, dass** die Steuervorrichtung Folgendes aufweist
eine Einrichtung zum in Eingriff bringen der automatischen Kupplung (14), wenn ein Eingriffsdrehmoment (STC), das größer als das Drehmoment (TE) der Antriebsquelle (12) ist, kleiner als ein Grenzwert (TCG) ist, mit dem Eingriffsdrehmoment (STC), und
eine Einrichtung zum in Eingriff bringen der automatischen Kupplung (14), wenn das Eingriffsdrehmoment (STC) gleich zu oder größer als der Grenzwert (TCG) ist, mit einem Eingrissdrehmoment (STC), das zu dem Drehmoment (TE) der Antriebsquelle (12) korrespondiert.

3. Steuervorrichtung nach Anspruch 2,
**gekennzeichnet durch**
eine Einrichtung zum Erhöhen des Eingriffsdrehmoments (STC) in Ansprechen auf das Drehmoment (TE) der Antriebsquelle (12), wenn das Drehmoment (TE) der Antriebsquelle (12) beginnt, sich auf der Grundlage des Drehmomentbefehlswerts (STE) zu erhöhen.

4. Steuervorrichtung nach einem der Ansprüche 1 bis 3, wobei
Die Antriebsquelle (12) eine Brennkraftmaschine ist, die Leistung durch Verbrennung eines Kraftstoffes generiert, um ein Fahrzeug anzutreiben; und
Synchronkupplungen (48a bis 48e) als eine Synchronisierungseinrichtung der Zahnradpaare (46a bis 46e) vorgesehen sind;
**gekennzeichnet dadurch, dass** die Steuervorrichtung Folgendes aufweist
eine Einrichtung zum Steuern des Drehmoments (TE) der Brennkraftmaschine (12) entsprechend einem ersten voreingestellten Drehmomentbefehlswert (STE1) bei einer Stufe, wenn die Synchronisation bei mindestens einer der Synchronkupplungen mit dem entsprechenden Zahnradpaar durch die Tatsache erfasst ist, dass ein Verhältnis zwischen einer Eingangswellendrehzahl und einer Ausgangswellendrehzahl des Schaltgetriebes zu einem Übersetzungsverhältnis von einem der Zahnradpaare korrespondiert, und
eine Einrichtung zum Steuern des Drehmoments (TE) der Brennkraftmaschine (12) entsprechend einem zweiten Drehmomentbefehlswert (STE2), der größer als der erste Drehmomentbefehlswert (STE1) ist, bei einer Stufe, wenn durch die Tatsache, dass eine Welle (52) des Schaltgetriebes (16) einen vorgegebenen Hub (SSH) erreicht, erfasst ist, dass Keile der mindestens einen der Synchronkupplungen mit ihrem korrespondierenden Zahnradpaar kämmen.

5. Steuervorrichtung nach einem der Ansprüche 1 bis 4 **gekennzeichnet durch**
Eine Einrichtung zum elektronischen Steuern des Drehmoments der Antriebsquelle entsprechend einem Betrag eines angeforderten Drehmoments.

6. Steuervorrichtung nach einem der Ansprüche 1 bis 5, **gekennzeichnet durch:**
eine Einrichtung zum elektronischen Steuern des Eingriffdrehmoments der automatischen Kupplung.

7. Steuervorrichtung nach einem der Ansprüche 1 bis 6, **dadurch gekennzeichnet, dass:**
der Schaltvorgang ein Hochschaltvorgang zu einer höheren Getriebestufe ist.

8. Steuerverfahren für ein Schaltgetriebe (16), wobei das Schaltgetriebe eine Vielzahl von Getriebestufen hat, durch eine Antriebsquelle (12) angetrieben wird und mit einer Ausgangswelle (44) und einer Eingangswelle (42) versehen ist, wobei eine automatische Kupplung (14) in einem Übertragungsweg (14) zwischen der Antriebsquelle (12) und dem Schaltgetriebe (14) zum wahlweisen Unterbrechen und Ermöglichen der Übertragung eines Drehmoments zwischen der Antriebsquelle (12) und dem Schaltgetriebe (14) vorgesehen ist, wobei das Steuerverfahren die folgenden Schritte umfasst:
Verringern eines Drehmoments der Antriebsquelle (12) und Lösen der automatischen Kupplung (14) während einem Schaltvorgang des Schaltgetriebes (16);
Steuern einer Drehzahl (TE) der Antriebsquelle (12) während einem Schaltvorgang des Schaltgetriebes (16), so dass sie sich von einer Drehzahl (NIN) einer Eingangswelle (42) des Schaltgetriebes (16) unterscheidet; und
Erhöhen des Drehmoments (TE) der Antriebsquelle (12) nach Abschluss des Schaltvorgangs hat;
**gekennzeichnet durch die folgenden Schritte:**
Erhöhen eines Drehmomentbefehlswerts (STE) für die Antriebsquelle (12) in Schritten von einem vorgegebenen Betrag, wenn das Drehmoment der Antriebsquelle wiederhergestellt wird, nachdem der Schaltvorgang abgeschlossen ist, wobei der vorgegebene Betrag basierend auf mindestens einem von dem angeforderten Drehmomentbetrag und einer Differenz zwischen der Drehzahl (NE) der Antriebsquelle (12) und der Drehzahl (NIN) der Eingangswelle (42) des Schaltgetriebes (16) festgesetzt ist, wobei
der Drehmomentbefehlswert (STE) auf eine diskontinuierliche Weise erhöht wird, wenn eine synchronisierte Drehzahl (NOUT x e), die das Produkt aus der Drehzahl NOUT der Ausgangswelle (44) des Schaltgetriebes (16) und dem Übersetzungsverhältnis (e) ist, annähernd mit der Drehzahl (NIN) der Eingangswelle (42) des Schaltgetriebes (16) in Übereinstimmung kommt, und wenn das Schaltgetriebe (16) eingekuppelt ist, und dann,
der Drehmomentbefehlswert (STE) allmählich erhöht wird, wenn die Drehzahldifferenz (NE-NIN) zwischen der Drehzahl (NE) der Antriebsquelle (12) und der Drehzahl (NIN) der Eingangswelle (42) des Schaltgetriebes (16) weniger als ein Schwellwert (ΔNS) ist, der verwendet wird, um das Drehmoment der Antriebsquelle (12) unter Vorwegnahme auf eine vollständige Synchronisation der Drehzahl (NE) der Antriebsquelle (12) mitzureißen.

## Revendications

1. Appareil de commande pour changement de vitesses d'une transmission (16), où
la transmission comporte une pluralité d'étages d'engrenages, est entraînée par une source d'entraînement (12) et est prévue avec un arbre de sortie (44) et un arbre d'entrée (42) ; ledit appareil de commande comprenant :
un moyen pour réduire un couple d'entrée fourni par ladite source d'entraînement (12) et pour désengager un embrayage automatique (14) pourvu entre ladite transmission (16) et ladite source d'entraînement (12) tandis qu'une opération de changement de vitesse entre chaque étage d'engrenages est exécutée, où
une vitesse de rotation (NE) d'un arbre de sortie (20) de ladite source d'entraînement (12) diffère d'une vitesse de rotation (NIN) de l'arbre d'entrée (42) de ladite transmission (16) durant une opération de changement de vitesse ; et
un moyen pour augmenter le couple (TE) de ladite source d'entraînement (12) après achèvement de l'opération de changement de vitesse ;
**caractérisé par**
un moyen pour augmenter une valeur de commande de couple (STE) pour la source d'entraînement (12) par étapes d'une quantité prédéterminée au rétablissement du couple de la source d'entraînement (12) après achèvement de l'opération de changement de vitesse, où
la quantité prédéterminée est établie sur la base d'au moins l'une de la quantité de couple requis et d'une différence entre la vitesse de rotation (NE) de la source d'entraînement (12) et la vitesse de rotation (NIN) dudit arbre d'entrée (42) de ladite transmission (16), et
la valeur de commande de couple (STE) est augmentée de manière discontinue lorsqu'une vitesse de rotation synchronisée (NOUT × e), qui est le produit de la vitesse de rotation NOUT de l'arbre de sortie (44) de ladite transmission (16) et du rapport d'engrenage (e), concorde approximativement avec la vitesse de rotation (NIN) dudit arbre d'entrée (42) de ladite transmission (16), et lorsque la transmission (16) est engrenée, et ensuite,
la valeur de commande de couple (STE) est graduellement augmentée lorsque la différence de vitesse de rotation (NE-NIN) entre la vitesse de rotation (NE) de la source d'entraînement (12) et la vitesse de rotation (NIN) dudit arbre d'entrée (42) de ladite transmission (16) est inférieure à une valeur seuil (ΔNS) qui est utilisée pour accroître le couple de la source d'entraînement (12) en vue d'une synchronisation complète de la vitesse de rotation (NE) de la source d'entraînement (12).

2. Appareil de commande selon la revendication 1,
**caractérisé par** le fait de comprendre
un moyen pour engager l'embrayage automatique (14), lorsqu'un couple d'engagement (STC) qui est supérieur au couple (TE) de la source d'entraînement (12) est inférieur à une valeur limite (TCG), avec ce couple d'engagement (STC), et
un moyen pour engager l'embrayage automatique (14), lorsque ce couple d'engagement (STC) est supérieur ou égal à la valeur limite (TCG), avec un couple d'engagement (STC) correspondant au couple (TE) de la source d'entraînement (12).

3. Appareil de commande selon la revendication 2,
**caractérisé par**
un moyen pour augmenter le couple d'engagement (STC) en réponse au couple (TE) de la source d'entraînement (12) lorsque le couple (TE) de la source d'entraînement (12) comment à augmenter sur la base de la valeur de commande de couple (STE).

4. Appareil de commande selon l'une quelconque des revendications 1 à 3, dans lequel
la source d'entraînement (12) est un moteur à combustion interne qui produit de la puissance en brûlant du carburant pour entraîner un véhicule ; et
des embrayages synchronisés (48a-48e) sont pourvus comme moyen de synchronisation desdites paires d'engrenage (46a-46e) ;
**caractérisé en ce que** l'appareil de commande comprend un moyen pour commander le couple (TE) du moteur à combustion interne (12) selon une première valeur de commande de couple préétablie (STE1) à un stade où la synchronisation d'au moins l'un des embrayages synchronisés avec la paire d'engrenages respectifs est détectée par le fait qu'un rapport entre la vitesse de l'arbre d'entrée et la vitesse de l'arbre de sortie de la transmission correspond à un rapport d'engrenage de l'une desdites paires d'engrenages, et
un moyen pour commander le couple (TE) du moteur à combustion interne (12) selon une deuxième valeur de commande de couple (STE2) qui est supérieure à la première valeur de commande de couple (STE1) à un stade où on détecte que des cannelures d'au moins l'un des embrayages synchronisés sont engrenées avec leur paire d'engrenages correspondante par le fait qu'un arbre (52) de ladite transmission (16) atteint une course prédéterminée (SSH).

5. Appareil de commande selon l'une quelconque des revendications 1 à 4,
**caractérisé par**
un moyen pour commander électroniquement le couple de la source d'entraînement selon une quantité de couple requis.

6. Appareil de commande selon l'une quelconque des revendications 1 à 5, **caractérisé par** :
un moyen pour commander électroniquement le couple d'engagement dudit embrayage automatique.

7. Appareil de commande selon l'une quelconque des revendications 1 à 6, **caractérisé en ce que** :
l'opération de changement de vitesse est une opération de passage à la vitesse supérieure à un étage d'engrenages supérieur.

8. Procédé de commande pour changement de vitesses d'une transmission (16), dans lequel la transmission comprend une pluralité d'étages d'engrenages, est entraînée par une source d'entraînement (12) et est prévue avec un arbre de sortie (44) et un arbre d'entrée (42), où un embrayage automatique (14) est pourvu dans une voie de transmission entre ladite source d'entraînement (12) et ladite transmission (16) pour interrompre et activer de manière sélective la transmission d'un couple entre ladite source d'entraînement (12) et ladite transmission (16), où le procédé de commande comprend les étapes qui consistent :
à réduire un couple de ladite source d'entraînement (12) et à désengager ledit embrayage automatique (14) durant une opération de changement de vitesse de ladite transmission (16) ;
à commander une vitesse de rotation (TE) de ladite source d'entraînement (12) durant une opération de changement de vitesse de ladite transmission (16) de sorte qu'elle diffère d'une vitesse de rotation (NIN) d'un arbre d'entrée (42) de ladite transmission (16) ; et
à augmenter le couple (TE) de ladite source d'entraînement (12) après achèvement de l'opération de changement de vitesse ;
**caractérisé par** les étapes qui consistent :
à augmenter une valeur de commande de couple (STE) pour la source d'entraînement (12) par étapes d'une quantité prédéterminée au rétablissement du couple de la source d'entraînement après achèvement de l'opération de changement de vitesse, où la quantité prédéterminée est établie sur la base d'au moins l'une de la quantité de couple requis et d'une différence entre la vitesse de rotation (NE) de la source d'entraînement (12) et la vitesse de rotation (NIN) dudit arbre d'entrée (42) de ladite transmission (16), où
la valeur de commande de couple (STE) est augmentée de manière discontinue lorsqu'une vitesse de rotation synchronisée (NOUT × e), qui est le produit de la vitesse de rotation NOUT de l'arbre de sortie (44) de ladite transmission (16) et du rapport d'engrenage (e), concorde approximativement avec la vitesse de rotation (NIN) dudit arbre d'entrée (42) de ladite transmission (16), et lorsque la transmission (16) est engrenée, et ensuite,
la valeur de commande de couple (STE) est graduellement augmentée lorsque la différence de vitesse de rotation (NE-NIN) entre la vitesse de rotation (NE) de la source d'entraînement (12) et la vitesse de rotation (NIN) dudit arbre d'entrée (42) de ladite transmission (16) est inférieure à une valeur seuil (ΔNS) qui est utilisée pour accroître le couple de la source d'entraînement (12) en vue d'une synchronisation complète de la vitesse de rotation (NE) de la source d'entraînement (12).
